# EUROPEAN PATENT APPLICATION

(11) **EP 4 145 364 A1**
(43) Date of publication of application: **08.03.2023**
(21) Application number: 21425041.7
(22) Date of filing: 03.09.2021
(51) Int. Cl.: G06Q 10/04

(54) **MONITORING OPERATOR FATIGUE**

(71) Applicant: Rockwell Collins, Inc., Cedar Rapids, IA 52498 (US)
(72) Inventor: Rucco, Matteo, Roma 00185 (IT); Sarka, Soumalya, Connecticut 06108 (US); De Antoni, Andrea, Roma 00185 (IT); Tonelli, Cecilia, Roma 00185 (IT); Minopoli, Stefano, Roma 00185 (IT)
(74) Representative: Dehns

(57) **Abstract**

Disclosed are methods for monitoring operator fatigue. In particular, indications of operator fatigue are obtained using a natural language-based communication interface (310). These are then processed using natural language-based processing (312) to determine a set of one or more data points indicative of the operator's current fatigue level. At the same time, data indicative of the current ambient conditions within the system is obtained. It is then determined which actions are to be performed by a control circuit of the system to reduce operator fatigue. A respective rule can thus be generated that can be automatically applied by the control circuit when similar ambient conditions are subsequently encountered within the system.

## Description

### Technical Field

This disclosure relates to apparatus and methods for monitoring operator fatigue, in particular in the context of highly interactive systems such as collaborative human-robot ("cobot") systems, autonomous/semi-autonomous vehicle systems, or any other such environments where it may be important to monitor operator fatigue to increase personalised safety and/or performance.

### Background

In manufacturing environments, operator fatigue is a challenging ergonomic/safety issue since it both lowers productivity and increases the risk of accidents. Therefore, it is desirable to be able to monitor physical fatigue of operators working in such environments. Up to now, the approach to manage and reduce physical fatigue in work places mainly relies on standard and procedure, e.g. scheduled breaks, resting time, etc.. However, such approaches cannot account for any subjective variation in user fatigue that might be personalised to the operator, or other environmental factors.

Wearable sensors offer enhanced opportunities to collect data to gain a better understanding of operator fatigue (e.g. using the Borg Rating of Perceived Exertions (RPE) scale). However, this approach is still rather crude since it merely provides a quantitative measure of physical exertion, but does nothing to elucidate what may have caused the fatigue of a specific operator, and therefore may not allow direct and meaningful actions to be taken to improve conditions to reduce fatigue.

Similar problems of course arise in other situations which rely on operator alertness, such as when operating an autonomous/semi-autonomous vehicle (including aircraft), or operating any other heavy or sensitive machinery in non-manufacturing environments.

It is therefore desired to provide improved systems and methods for monitoring operator fatigue.

### Summary

In accordance with a first aspect, the present disclosure provides a method of monitoring a fatigue level of an operator within a system, wherein the system is a collaborative system that is operated through a combination of the operator's actions and actions performed by a control circuit of the system, the method comprising:
obtaining, using a natural language-based communication interface, an indication from the operator of their current fatigue level, wherein the indication is provided using natural language;
providing the indication to a natural language processing (NLP) unit, the NLP unit performing natural language-based processing on the indication to determine a set of one or more data points indicative of the operator's current fatigue level;
obtaining, from one or more environmental sensors, data indicative of the current ambient conditions within the system, the ambient conditions thereby being associated with the operator's current fatigue level;
determining, using the determined set of one or more data points indicative of the operator's current fatigue level and the associated ambient conditions, one or more actions to be performed by the control circuit of the system to reduce operator fatigue; and
generating a respective rule that can be automatically applied by the control circuit when similar ambient conditions are subsequently encountered within the system, the respective rule comprising an input set of ambient conditions and a corresponding one or more actions to be performed when the input set of ambient conditions is encountered.

In accordance with a second aspect, the present disclosure provides an apparatus for monitoring a fatigue level of an operator within a system, wherein the system is a collaborative system that is operated through a combination of the operator's actions and actions performed by a control circuit of the system, the apparatus comprising:
a natural language-based communication interface operable to obtain from an operator of the system an indication in natural language of the operator's current fatigue level;
a natural language processing (NLP) unit operable to process the natural language-based indications obtained via the natural language-based communication interface operable in order to determine a set of one or more data points indicative of the operator's current fatigue level;
a set of one or more environmental sensors operable to obtain data indicative of the current ambient conditions within the system; and
a control circuit for the system, wherein the control circuit is operable such that:
   in response to the natural language-based communication interface obtaining an indication of the operator's current fatigue level and the NLP unit then processing the indication to determine a set of one or more data points indicative of the operator's current fatigue level:
   the control circuit obtains from the set of one or more environmental sensors data indicative of the ambient conditions associated with the operator's current fatigue level;
   the control circuit then determines, using the determined set of one or more data points indicative of the operator's current fatigue level and the associated ambient conditions, one or more actions to be performed by the control circuit of the system to reduce operator fatigue; and
   the control circuit generates a respective rule that can be automatically applied by the control circuit when similar ambient conditions are subsequently encountered within the system, the respective rule comprising an input set of ambient conditions and a corresponding one or more actions to be performed when the input set of ambient conditions is encountered.

The above arrangements thus provide a novel approach for gathering information relating to a system operator's perceived current fatigue level, and for processing this information in substantially real-time to provide meaningful insight into the causes of the operator's perceived fatigue. It is then possible to perform appropriate actions to try to improve the operating conditions in order to reduce the operator's fatigue level. Furthermore, the monitoring apparatus can then learn which conditions might cause a particular operator to experience fatigue, such that the control circuit can subsequently automatically implement personalised actions in order to reduce fatigue and/or increase performance when such conditions are encountered (e.g. without seeking or requiring operator input).

Thus, after determining one or more actions to be performed by the control circuit to reduce operator fatigue, the control circuit then performs the determined actions accordingly. A respective rule can then be generated, optionally after validating that the actions have had a positive effect, as will be described below, with the control circuit subsequently being operable and arranged to automatically perform one or more actions based on the generated rule. Thus, in embodiments, after a respective rule has been generated, the control circuit is then operable to automatically control the system based on the generated rule, e.g. by performing appropriate actions based on the ambient environmental conditions.

This may therefore provide various improvements compared to other possible approaches in terms of being able to gather more (and more meaningful) information regarding the operator's fatigue level and to then take appropriate actions based on this information. In this way, a personalised operator fatigue monitoring tool can be provided that is therefore able to better manage a particular operator's fatigue conditions, and thereby improve operator safety and/or performance.

According to the approach described herein, an indication of the operator's current fatigue level is obtained using a natural language-based interface. In embodiments, this is done by having the monitoring apparatus generate a suitable query or set of queries to elicit such information. For example, the monitoring apparatus may be configured to periodically ask the operator for an indication of their current fatigue level. This query can then be submitted to the operator via the natural language-based interface in order to elicit a response from the operator.

The query may take any suitable and desired form, depending on the system in question. Typically it will comprise a structured query containing at least a first part asking the operator to rate their perceived fatigue level, e.g. according to some suitable, predetermined scale, e.g. by rating their fatigue level from a scale of 0 to 10 (although the actual scale is of course arbitrary and any suitable indication can be used in this respect as desired). In embodiments, the monitoring apparatus also elicits information about which environmental factors are causing the operator's current fatigue level. This can be done as part of a single structured query, e.g. having two parts, or by sending a set of queries, with the response to the first query then determining which query is sent next, and so on, in order to gather the desired information. Various arrangements would be possible in that regard.

Thus, in embodiments, obtaining the indication from the operator of their current fatigue level comprises the natural language-based communication interface issuing to the operator a query, wherein the query is structured to prompt the operator to provide an indication of their current fatigue level. In some embodiments, the query is further structured to prompt the operator to provide a response including an indication of a cause of their current fatigue level and/or one or more further queries are issued to the operator using the natural language-based communication interface to obtain an indication of a cause of the operator's current fatigue level.

Such queries may be generated strictly periodically, e.g. at a set time interval, e.g. which may be selected depending on the context. For instance, a time interval of every 5 minutes might be appropriate in some systems, but there will of course be some trade-off between asking too frequently and risking annoying the operator and ensuring that information is gathered frequently enough to allow the monitoring apparatus to work effectively. In that case, the interval may vary over time, e.g. so that such prompts are issued less frequently as the apparatus learns more about a particular operator's behaviour. Correspondingly, it would also be possible to have the monitoring apparatus generate such queries more dynamically, e.g. in response to detecting that something has changed within the system and/or that the operator has started to slow down, or has an increased heart rate, etc.. Various combinations of these approaches could also be used, as desired.

Such queries are then in embodiments provided to the operator in natural language format for ease of understanding. This has been found to aid in increasing the operator's acceptance of, and engagement with, the monitoring apparatus. The natural language-based interface may therefore convert the data queries into a suitable natural language format. In embodiments the natural language-based interface is an audio interface such that the queries are provided to the operator in audio format (and the interface is correspondingly arranged to receive verbal responses from the operator). This may facilitate a more real-time system as the operator is in that case free to carry on with their assigned tasks. In that case, the apparatus may include a suitable speech synthesis module that is operable to convert the structured data queries into a natural language format for output by the natural language-based interface. However, in embodiments the natural language-based interface could also comprise a text-based or other suitable interface, if that was desired.

The natural language-based interface is thus also arranged to receive corresponding responses from the operator. For example, the operator's response will typically contain an indication of their current fatigue level. Since this response is provided in natural language, the operator's response therefore needs to be processed in order to extract the required information in a format that can be used in a meaningful (and reproducible) manner in order to control the system. This can be done in various suitable ways but will typically involve at least a step of semantic analysis that processes the natural language-based response in order to extract one or more key words or phrases that are indicative of the operator's current fatigue level. When the operator's response is verbal this may also involve a prior step of processing the audio signal(s) representing the operator's response to convert the operator's response into an appropriate, e.g. text, format to facilitate such semantic analysis. Various speech recognition algorithms may be used in this regard.

This analysis is done by a suitable natural language processing (NLP) unit that is operable to execute one or more algorithms to analyse the indications obtained from the operator via the natural language-based interface to determine a set of one or more data points indicative of the operator's current fatigue level. For instance, in embodiments, the NLP unit executes a machine learning model that has been trained to process natural language indications from an operator in order to determine data points indicative of a current fatigue level and/or a cause of a current fatigue level. Thus, the query that is submitted to the operator may ask the operator to rate their perceived current fatigue level according to a certain predefined scale (which may, e.g., be based on the Borg RPE scale, although any suitable quantitative assessment of the operator's fatigue level may be used). In that case, the NLP unit may be arranged to process the operator's response in order to extract a (numerical) value according to this scale.

In embodiments, the NLP unit is also able and configured to process the operator's response to extract qualitative information relating to the causes of the operator's fatigue. Thus, the natural language processing (NLP) in an embodiment comprises a semantic analysis that determines not only a perceived fatigue value (e.g. according to a certain scale) but also determines a perceived environmental cause of the fatigue. For example, the NLP-based processing may analyse the indication(s) provided by the operator in order to determine which environmental conditions are causing the operator to feel tired. This may be done by extracting one or more key words from the indication which key words are associated with respective environmental conditions. For instance, the NLP unit may maintain a relational database that stores associations between certain words or phrases (as well as synonyms thereof) and respective environmental conditions.

An example of this might be where the operator's indication comprises a phrase such as "it is cold outside" or "I am too cold". The semantic analysis may process this and extract the key word "cold" to thereby determine that the ambient temperature is too cold for the current operator. In that case, the control circuit may then be caused to turn on a heater appropriately to raise the temperature.

As part of the processing described above, the control circuit may also generate further queries, as desired. For example, if the operator's response is missing some information or cannot be reliably processed by the NLP unit, the control circuit may trigger the natural language-based communications interface to issue a further query to try to elicit the desired information. Likewise, the NLP unit may give an ambiguous result in which case it may be desired to elicit further information from the operator. Various arrangements would be possible in that regard.

At the same time as obtaining the indications directly from the operator, the actual ambient temperature can be measured, using a set of environmental sensors, and recorded and used to generate a new personalised rule for that operator. The data indicative of the current ambient conditions may be obtained continuously and then related to the operator's response appropriately. For instance, the data indicative of the current ambient conditions may correspond to the data obtained from the environmental sensors within a certain time interval associated with the operator's response. In that way, the ambient conditions associated with the operator's self-reported fatigue condition can be determined. This information can all be used together to determine which actions to be performed, and to generate respective rules based on which the system can subsequently be controlled.

For example, if the temperature at the time at which the operator indicates they are too cold is within a first temperature range, a new rule can be generated for the control circuit accordingly. So, in this example, the rule may comprise a conditional rule such as "if the ambient temperature is within the first temperature range, turn on the heater". In that case, the first temperature range may, for example, be a pre-set range (e.g. +/- 5%) of the current temperature, or may represent the temperature over a pre-defined interval (e.g. within the last 30 minutes, or so). Other arrangements would be possible.

The rules may of course be more or less complex, depending on the system in question and the amount of information available to the monitoring system. For instance, when the operator's response indicates one or more specific causes of fatigue (e.g. a low temperature), the rule may correspondingly relate (only) to environmental conditions directly related to those causes. However, if there is no contextual information, an initial rule may be generated using any of the available information. Further rules may then be generated over time to refine the behaviour and identify the root causes of operator fatigue, and the appropriate actions to take. Various other examples would of course be possible.

Thus, the environmental sensors may be any suitable and desired environmental sensors for obtaining any suitable information that may be relevant to the operator's perceived fatigue. For instance, in embodiments, the step of obtaining, from one or more environmental sensors, data indicative of the current ambient conditions within the system includes at least obtaining data indicative of the current ambient temperature within the system. However, data may also be obtained that is indicative of various other ambient conditions such as but not limited to ambient lighting conditions, ambient humidity, ambient air quality, etc.. Any of this information can then be used by the processor accordingly when determining actions to take and/or when generating respective rules.

Accordingly, once the apparatus has processed the operator's response to determine the fatigue level, and possible causes of fatigue, this information is then used together with the measurements of the environmental conditions to determine one or more actions to perform to try to improve the operator's fatigue condition. This is done by a suitable one or more processor (processing circuit) associated with the control circuit. For instance, this determination may be performed using a suitable algorithm that has relational knowledge of the components in the system that are controlled (or controllable) by the control circuit. The processing may know which system components can be used to adjust which environmental conditions, and determine appropriate actions accordingly based on the perceived environmental causes of fatigue. For example, when it is determined from an operator's response that the operator is feeling too cold, the processing may determine using the known relationships that this condition can be improved by turning on a heater of the system, and can thus determine to take that action. Or, when the operator is experiencing fatigue, but does not provide any insight into the environmental cause, actions may be taken to reduce fatigue (e.g. slowing down a part of the system, increasing lighting, and so on). These actions can then be correlated with the current ambient conditions to try to elucidate further rules that can be applied.

This may also involve correlating the operator's perceived fatigue with a time of day, for example. Thus, the apparatus may determine that an operator experiences increased levels of fatigue towards the end of their operating shift, in which case actions can be taken to try to delay the onset of fatigue. Other similar examples would of course be possible, depending on the operator in question. Thus, in embodiments, the generated rules also include timing information, such that the system control can be varied over time.

Thus, in embodiments, one or more actions to be performed by the control circuit are determined and the control circuit then performs the actions accordingly. However, rather than simply performing the actions and then waiting for further operator indications, a rule is generated relating those actions to the corresponding environmental conditions that prompted the actions to be performed, with rule can then be subsequently used to automatically adapt the system to reduce operator fatigue without requiring explicit input from the operator.

The generated rule is thus effectively a data set that comprises a set of input conditions (i.e. the ambient environmental conditions associated with the operator's self-reported fatigue level) and a corresponding set of output actions. The rule can then be stored, e.g. in a memory unit associated with the monitoring apparatus, and used appropriately to control the system in the future when similar environmental conditions are encountered. This could be done by building a database or list of such rules that can be checked. However, in embodiments, the rules (data sets) are used to train a machine learning model that is used to control the operation of the system. Thus, the generate rule(s) may be used as training data for a model that is then executed by the control circuit in order to automatically adapt the system based on the ambient conditions in order to reduce operator fatigue. In that regard it will be appreciated that the rules are typically well defined in terms of respective sets of input environmental conditions and corresponding output actions and may thus be in a suitable format for training a suitable machine learning model, such as a neural network, to process input data obtaining from the environmental sensors and determine a corresponding one or more actions to perform to try to reduce operator fatigue. Any such generated rules (optionally after validating that the actions have had a positive effect) may thus be added to a training corpus for a model that is deployed by the control circuit in order to automatically control the system based on the environmental conditions to try to reduce operator fatigue. The training corpus may also include a number of standard rules, e.g. that have been developed during an initial training phase in order to bootstrap the model.

These rules can be updated over time to provide personalised monitoring system. Thus, when system determines actions to take, this is preferably used to update/generate new rules. The rules can then be applied automatically to try to improve working conditions. For instance, when the rules are used as training data for a machine learning model, the model can be periodically re-trained and/or updated over time as new rules are generated for a particular operator. The model can then be deployed as part of a fatigue monitoring apparatus that is thereby able to learn over time how to improve the conditions for the operator.

Thus, in embodiments, the method further comprises: monitoring the ambient conditions within the system, and when a respective rule indicates that the control circuit should apply one or more actions based on the current ambient conditions, the control circuit then performing the corresponding one or more actions. As mentioned above, this may be done directly using the rules (when they are stored in a database), or may be done indirectly by building the rules into a suitable overall model that is able to adapt to the operator's behaviour. Thus, in embodiments, the control circuit is operated under control of a trained model that causes the control circuit to automatically perform various actions based on the current environmental conditions to try to reduce operator fatigue.

It will be appreciated that a given set of actions that are determined to be performed may not actually improve the operator's perceived fatigue level. In that case, any rules generated based on such actions may not be good general rules to apply in subsequent situations. Thus, in embodiments, before generating and/or storing such rule for subsequent use, the monitoring apparatus attempts to validate the rule. For example, this can be done in a similar manner as the initial indication was obtained by the monitoring apparatus generating a suitable query for the operator to elicit whether or not the operator's fatigue level has improved, and then analysing the response appropriately. For example, after a respective set of one or more actions to be performed by the control circuit has been determined: the natural language-based communication interface may issue to the operator a query for validating the one or more actions. If the operator's response indicates that the actions were effective (i.e. that their fatigue condition has improved), a corresponding rule can then be stored appropriately for further use. Otherwise, the rule may be discarded.

In the example above the rule is generated using the data points determined through the NLP analysis of the operator's response, together with the actual sensed ambient environmental conditions. However, the monitoring apparatus may, and in embodiments does, also take into account any other information that is available to it. For example, in addition to the environmental sensors that are operable to obtain information regarding the ambient environmental conditions (such as temperature, lighting conditions, humidity, air quality, and the like), the monitoring apparatus may further comprise various other sensors in particular including sensors for monitoring the operator's physical condition. These may include wearable sensors for monitoring the operator's heart rate, speed of movement, etc., but also cameras and other such sensors that can be used to monitor the operator. This information can also then be fed into the determination of the operator's current fatigue level and the actions that are to be taken, and in turn used when generating the rules based on which the system is subsequently controlled.

In embodiments, the method is performed for an individual operator. Thus, when the operator starts work, they can provide appropriate identifier to the monitoring apparatus to cause the monitoring apparatus to load an appropriate model for that operator. Thus, the monitoring apparatus may store a plurality of different models for a respective plurality of different operators.

The technology described herein can be applied to any suitable system in which it may be desired to monitor an operator's fatigue conditions. Correspondingly, the actions that the control circuit may perform may be any suitable and desired actions, e.g. depending on the system.

An example of, this would be a collaborative human-robot ("cobot") manufacturing system. In that case, the operator and robot work together to perform a desired manufacturing operation. Typically, this will involve the operator and robot performing complementary, e.g. sequential, actions. When an operator is experiencing high levels of fatigue they may therefore slow down, and become out of sync with the robot. In that case, the actions that are performed in response to determining that an operator is experiencing higher levels of fatigue may include temporarily slowing down the robot. Other actions may include adjusting a heater and/or light source in order to change the ambient conditions.

Thus, in embodiments, the system is a collaborative human-robot system, wherein the control circuit is configured to control a robot that is performing one or more tasks in collaboration with a human operator, and wherein the one or more actions to be performed by the control circuit of the system to reduce operator fatigue include one or more of: (i) adjusting (e.g. reducing) a speed of the robot; (ii) controlling a heater to adjust the ambient temperature; or (iii) controlling a light source to adjust the ambient lighting conditions.

Another example would be in the context of an autonomous/semi-autonomous vehicle such as a car with an autonomous driving or advanced driver assistance module, or an aircraft with an autopilot or digital co-pilot functionality. In that case, the operator may generally have full authority over the system so that can override control circuit as necessary, such that the operator and the control circuit may be able to perform the same actions, to greater or lesser degrees. In that case, the actions that are performed in response to determining that an operator is experiencing higher levels of fatigue may comprise delegating more control to the control circuit. Other actions may include adjusting a heater and/or light source in order to change the ambient conditions.

Thus, in embodiments, the system is a semi-autonomous or intelligent vehicle system, wherein the control circuit is configured either to control the vehicle itself or to control one or more conditions within the vehicle, and wherein the one or more actions to be performed by the control circuit of the system to reduce operator fatigue include one or more of: (i) delegating control to an autonomous or advanced vehicle operator assistance module of the vehicle; (ii) controlling a heater to adjust the ambient temperature within the vehicle; or (iii) controlling a light source to adjust the ambient lighting conditions within the vehicle.

In both cases, the actions that are performed in response to determining that an operator is experiencing higher levels of fatigue may therefore comprise actions that are related to the primary purpose of the system (e.g. adjusting the speed at which a robot performs its tasks, or delegating more or less control to an operator assistance system within a vehicle) but may also comprise actions that are not related to primary purpose of the system, but for example relate to control of the environmental conditions within the system. For example, such actions may include adjusting a heater or air conditioning unit associated with the system and/or adjusting lighting conditions in order to try to alleviate operator fatigue. Various other arrangements would of course be possible.

It will be appreciated that any and all of the optional features described herein with respect to examples of the present disclosure may be combined in any suitable combination as appropriate.

The methods in accordance with the technology described herein may be implemented at least partially using software e.g. computer programs. It will thus be seen that when viewed from further embodiments the technology described herein comprises computer software specifically adapted to carry out the methods herein described when installed on a data processor, a computer program element comprising computer software code portions for performing the methods herein described when the program element is run on a data processor, and a computer program comprising code adapted to perform all the steps of a method or of the methods herein described when the program is run on a data processor. The data processor may be a microprocessor system, a programmable FPGA (field programmable gate array), etc..

The technology described herein also extends to a computer software carrier comprising such software which when used to operate a graphics processor, renderer or microprocessor system comprising a data processor causes in conjunction with the data processor the processor, renderer or system to carry out the steps of the methods of the technology described herein. Such a computer software carrier could be a physical storage medium such as a ROM chip, CD ROM, RAM, flash memory, or disk, or could be a signal such as an electronic signal over wires, an optical signal or a radio signal such as to a satellite or the like.

It will further be appreciated that not all steps of the methods of the technology described herein need be carried out by computer software and thus from a further broad embodiment the technology described herein comprises computer software and such software installed on a computer software carrier for carrying out at least one of the steps of the methods set out herein.

The technology described herein may accordingly suitably be embodied as a computer program product for use with a computer system. Such an implementation may comprise a series of computer readable instructions either fixed on a tangible, non-transitory medium, such as a computer readable medium, for example, diskette, CD-ROM, ROM, RAM, flash memory, or hard disk. It could also comprise a series of computer readable instructions transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink-wrapped software, pre-loaded with a computer system, for example, on a system ROM or fixed disk, or distributed from a server or electronic bulletin board over a network, for example, the Internet or World Wide Web.

### Brief Description of the Drawings

Various examples of the present disclosure will now be described with reference to the accompanying drawings, in which:
Fig. 1 is a schematic diagram of a collaborative human-robot ("cobot") system in accordance with an example of the present disclosure;
Fig. 2 is a block diagram showing an overall architecture in accordance with an example of the present disclosure; and
Fig. 3 is a flow chart illustrating the overall monitoring apparatus according to an embodiment.

### Detailed Description

The present disclosure provides novel techniques for eliciting qualitative and quantitative indications of a human operator's fatigue conditions. These indications are then used to derive a personalised runtime monitor that is able to determine (in real time) when an operator is likely to be experiencing fatigue and to suggest appropriate actions to manage or reduce the operator's fatigue.

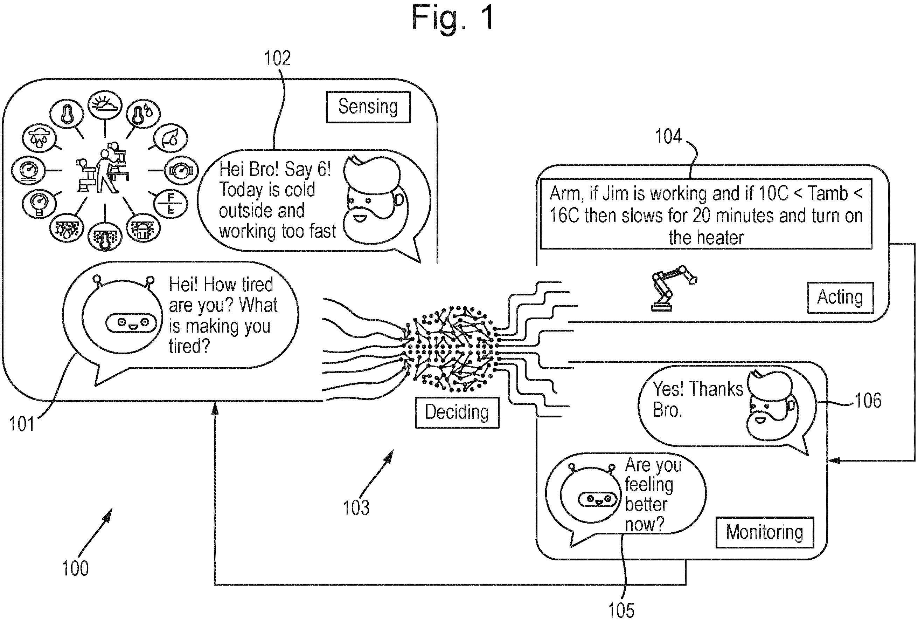

Fig. 1 is a schematic diagram of a collaborative human-robot ("cobot") manufacturing system in accordance with an example of the present disclosure. The present embodiments use various sensors associated with the operator and/or the system to register data such as acceleration, position, speed, number of movements, ambient temperature, lighting levels, and the like. This information is combined with real-time question-answer analysis of the operator's self-perceived fatigue level.

For instance, the system including a monitoring apparatus 100 that is able to generate operator queries 101 using natural language and to receive and process natural language-based responses from the operator 102 in order to extract both a quantitative measure of the operator's fatigue condition as well as qualitative insight as to what conditions may have contributed to the operator's fatigue condition, and hence what actions might be taken to improve the working conditions. The monitoring apparatus is thus arranged to periodically query the operator to obtain an indication of their current fatigue condition. This may be done periodically, e.g. at a set interval, e.g. every 5 minutes, or may be prompted by a change that is sensed by the wearable and/or environmental sensors.

Thus, the monitoring apparatus may generate a structured query 101 that is then provided to the operator in natural language to obtain an indication of their perceived fatigue level. The query is generally a structured query designed to elicit the required information. For instance, in the example shown in Fig. 1, the query 101 comprises a first part that is designed to elicit a measure of the current fatigue condition (e.g. 'How tired are you?') and a second part that is designed to elicit an indication of the cause of this (e.g. 'What is making you tired?'). These parts may be provided as part of a single structured query, as shown in Fig. 1, or may be provided separately, e.g. such that the second part of the query is only provided conditionally on the response to the first part. Various examples would be possible in that regard.

The operator can then provide a response 102 to the query (queries), again using natural language. The operator's response is then processed suitably using natural language-based processing techniques in order to extract relevant information from the response. For instance, in Fig. 1, the operator's response 102 comprises: "Hey Bro! Say 6! Today is cold and working too fast!". The operator's response 102 may first perform suitable speech recognition to convert the audio signals into an appropriate (e.g. text-based) format for analysis. The natural language-based processing 103 may thus perform semantic analysis in order to extract the relevant information. For example, in a first step, the operator's response may be processed in order to remove any extraneous or linking words to thereby extract the actual information content of the response. In the example shown in Fig. 1, this would involve extracting the operator's perceived fatigue level, i.e. '6', as well as the relevant key words/phrases 'cold' and 'too fast'. This can be done in various ways, e.g. using any suitable and desired natural language processing algorithms. Typically this will involve training the algorithm based on the system in question in order to learn key words/phrases. For example, the natural language processing unit (NLP) may be trained using historic data, or during dedicated testing sessions, in order to understand the relationships between the operator's response and the perceived fatigue level and environmental causes of fatigue, and so on.

Once the operator's response 102 has been processed to determine a current operator fatigue level, as well as the contextual information relating to the causes of the operator fatigue, this information can then be processed further in order to determine a corresponding set of actions 104 to take to try to reduce the operator's fatigue level. For instance, in the example of Fig. 1, the actions 104 may comprises increasing the temperature and/or slowing down the robotic arm.

These actions 104 can then be implemented appropriately. The monitoring apparatus 100 can then validate that the actions 104 have had the desired effect by issuing another suitable operator query 105, e.g. 'Are you feeling better now?'. Assuming the operator responds positively 106, the obtained information can then be combined into a new rule that can be subsequently, automatically applied when similar conditions to those which causes the operator fatigue are encountered in the future. For example, in Fig. 1, a rule is generated as follows: "If <operator_name> is working and if 10°C < ambient temperature < 16°C, then reduce robotic arm speed for 20 minutes and turn on heater".

Various other suitable rules can be generated appropriately and the rules can be more or less complex as desired. In this way, the monitoring system learns the operator's behaviour and working preferences over time. Thus, provides highly personalised monitoring apparatus that is able to automatically adjust to operator's subjective preferences and conditions in order to provide more tailored responses.

These rules can then be stored appropriately and used to build a personalised model that can be used by the control circuit to automatically adjust the system to the operator's preferences. This can be done in various suitable ways as desired. For instance, it will be appreciated that these rules can be considered as respective data points comprising a set of input conditions and a corresponding set of output actions that may therefore represent suitable training data for training a machine learning algorithm for controlling the operation of the system.

Any such generated rules may thus be added to a suitable training corpus that is periodically used to train/refine the model for controlling the system in order to reduce operator fatigue. The model is thus trained to determine various actions to be performed based on the current environmental conditions to reduce operator fatigue. The model is then deployed for use by the control circuit of the system, and causes the control circuit to perform actions based on inputs received from the environmental and other sensors.

In some cases the operator's response may be that they are currently fine, in which no actions may be performed. In that case, it may still be useful to store such information, e.g. to build that relationship into the model. It may also be the case that the operator's response cannot be processed to give meaningful information, or indeed that the operator does not provide a response. In that case, the monitoring apparatus may be configured to generate a further query or queries to try to elicit the required information. Various arrangements would be possible in that regard.

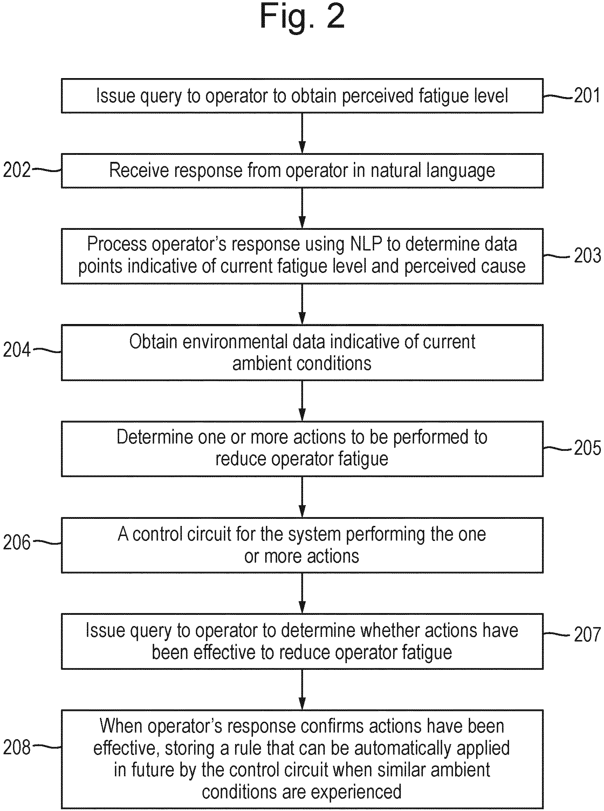

Fig. 2 is a flow chart showing the operation of a monitoring apparatus according to an embodiment. As discussed above, the monitoring apparatus is configured to periodically issue queries to the operator to obtain the operator's perceived fatigue level (step 201). The operator can then respond using natural language (step 202) and the operator's response is then processed using natural language processing techniques to determine data points indicative of their current fatigue level and a perceived cause of fatigue (step 203).

At the same time, environmental data is obtained from suitable sensors in order to obtain data of the current ambient conditions associated with the current fatigue level (step 204). This information can then all be processed together to determine one or more actions to be performed by a control circuit of the system in order to try to reduce operator fatigue (205). The control circuit can then performed the determined actions accordingly (step 206). This may involve changing the ambient temperature or lighting conditions or may involve directly controlling part of the system, e.g. by slowing down the robot.

The monitoring apparatus thus queries the operator again to determine whether or not the actions have had a positive effect in reducing their fatigue level (step 207). If the operator responds positively, a rule is then stored that can be automatically applied by the control circuit in future situations when similar ambient conditions are experienced (step 208). This rule can be stored and applied directly or in some embodiments this rule may be used to train a suitable neural network, or other model, to automatically adapt to the environmental conditions to reduce fatigue.

Any suitable and desired machine learning techniques may be used in that regard but in some embodiments this may involve a process of supervised learning using the generated rules, once validated, as input training data. Whilst various embodiments have been described above in the context of a collaborative human-robot ("cobot") manufacturing system it will be appreciated that the present disclosure is not limited to this context, and the personalised operator fatigue monitoring system of the present disclosure may generally find utility in various other collaborative systems where there is a high degree of interaction between the operator and the system, and wherein it is important that the operator therefore remains alert. For instance, another example would be when operating an autonomous/semi-autonomous vehicle such as a car, or an aircraft, having some advanced operator assistance (including an autopilot or digital co-pilot) functionality.

In that case, based on the operator's fatigue level, the control circuit for the vehicle may delegate a greater or lesser degree of control to the operator based on their fatigue level. Or, the control circuit may simply adjust the environmental conditions, such as the cockpit/vehicle temperature, lighting, etc., conditions. Various examples would be possible in that regard, e.g. depending on the system in question.

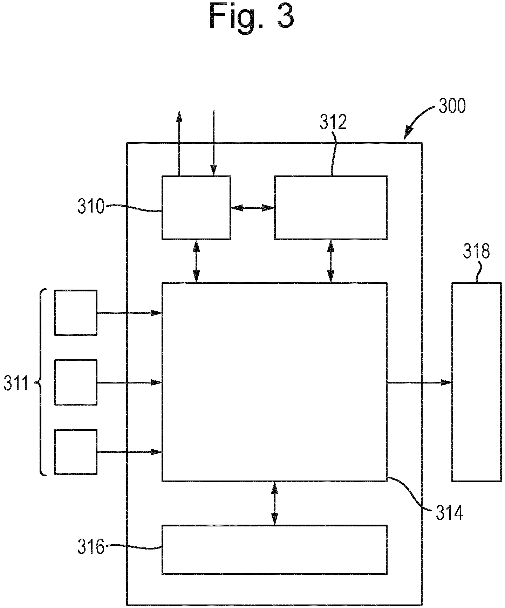

Fig. 3 is thus a block diagram showing the general system architecture according to an embodiment. In particular, Fig. 3 shows an example of a monitoring apparatus 300 according to an embodiment. As shown in Fig. 3, the monitoring apparatus 300 includes an operator interface 310 that is configured to provide communications with the operator. In the present embodiment the operator interface 310 is a natural language-based interface that is configured to provide audio output to the operator and to receive verbal responses from the operator. The operator interface 310 may thus comprise appropriate audio components such as a loudspeaker circuit and a microphone to facilitate this communication. The operator interface 310 may also comprise a suitable speech synthesis module that is operable to convert queries generated by the control circuit (processor) 314 into natural language-type speech for output to the operator. Likewise, the operator interface 310 is able to receive verbal responses from the operator and convert these into data suitable for processing by the monitoring apparatus 100. This may be done by a suitable speech recognition algorithm, which may, e.g., comprise a Hidden Markov model (HMM) or similar which is adapted to process acoustic signals into a meaningful sequence of words. Various suitable speech recognition algorithms are known which may suitably be used for this purpose, as desired.

The operator's responses are passed from the operator interface 310 to a suitable natural language processing (NLP) unit 312 that is operable to process the response to extract data points relating to the operator's fatigue condition. This can be done in any suitable manner as desired. For instance, the NLP unit 312 is generally operable to receive natural language operator responses and to then interpret and/or process the operator response accordingly. This processing may for instance result in a list of tags, e.g. key words, extracted from the operator response which reflect the semantics of the sentence (but omit stop words, etc.). In this way the natural language operator response can be converted into suitable data points for further processing. To facilitate this the NLP unit 312 may execute a trained model that has knowledge of the system components which can be specified using a suitable lexicon. For instance, the NLP unit 312 may be trained based on a suitable lexicon that comprises a semantic network describing the system components, their relationships and/or properties (e.g. actions which can be performed on them). The lexicon may further include a dictionary at least including a list of possible environmental causes of fatigue, as well as synonyms of the same.

This information is then passed to the control circuit (processor) 314 for further processing to determine one or more actions that should be performed to improve the operator's fatigue condition. These actions may depend on the perceived cause of the operator's fatigue and the system in question. For instance, the control circuit (processor) 314 also receives inputs from various environmental sensors and/or sensors associated with the operator 311, which information can elucidate the actions that should be taken. For instance, if it is determined from the NLP unit 312 processing of the operator's response that the operator is feeling cold, the current temperature can be checked from its respective sensor output 311, and the control circuit (processor) 314 can then issue a suitable control signal to the system 318 to turn on a heater. The control circuit (processor) 314 may also perform any other actions as desired to try to reduce operator fatigue.

Again, such actions can be determined using suitable relational knowledge of the components within the system. For instance, a relational database may be managed that correlates possible environmental causes of fatigue with various components of the system that can be controlled by the control circuit (processor) 314. For example, the temperature can be controlled by a heater of the system, and this relationship may be stored for use in such processing. Thus, when it is determined by processing the operator's response and/or environmental conditions that the operator is too cold, the control circuit (processor) 314 can determine to turn on the heater. Various other examples would be possible depending on the circumstances.

As shown in Fig. 3, the control circuit (processor) 314 may also be in communication with a memory 316 for storing suitable rules that can be automatically applied in future based on the conditions monitored by the sensors 311. These rules may be used directly or may be used for training a suitable neural network that is deployed by the control circuit (processor) 314. This processing may be done locally to the monitoring apparatus 300 as shown in Fig. 3. However, it would also of course be possible to offload any of the processing to a remote server, e.g. in the cloud, as desired. Various arrangements would be possible in that regard.

Thus, whilst specific examples of the disclosure have been described in detail, it will be appreciated by those skilled in the art that the examples described in detail are not limiting on the scope of the disclosure.

## Claims

1. A method of monitoring a fatigue level of an operator within a system, wherein the system is a collaborative system that is operated through a combination of the operator's actions and actions performed by a control circuit of the system, the method comprising:
obtaining, using a natural language-based communication interface, an indication from the operator of their current fatigue level, wherein the indication is provided using natural language;
providing the indication to a natural language processing (NLP) unit, the NLP unit performing natural language-based processing on the indication to determine a set of one or more data points indicative of the operator's current fatigue level;
obtaining, from one or more environmental sensors, data indicative of the current ambient conditions within the system, the ambient conditions thereby being associated with the operator's current fatigue level;
determining, using the determined set of one or more data points indicative of the operator's current fatigue level and the associated ambient conditions, one or more actions to be performed by the control circuit of the system to reduce operator fatigue; and
generating a respective rule that can be automatically applied by the control circuit when similar ambient conditions are subsequently encountered within the system, the respective rule comprising an input set of ambient conditions and a corresponding one or more actions to be performed when the input set of ambient conditions is encountered.

2. The method of claim 1, wherein obtaining the indication from the operator of their current fatigue level comprises the natural language-based communication interface issuing to the operator a query, wherein the query is structured to prompt the operator to provide an indication of their current fatigue level.

3. The method of claim 2, wherein the query is further structured to prompt the operator to provide an indication of a cause of their current fatigue level and/or wherein one or more further queries are issued to the operator using the natural language-based communication interface to obtain an indication of a cause of the operator's current fatigue level.

4. The method of claim 3, wherein the NLP unit is configured to process the obtained indications to determine data points indicative of the operator's current fatigue level and also to determine data points indicative of a cause of the operator's current fatigue level.

5. The method of any preceding claim, wherein the NLP unit executes a machine learning model that has been trained to process natural language indications from an operator in order to determine data points indicative of a current fatigue level and/or a cause of a current fatigue level.

6. The method of any preceding claim, further comprising: after determining a set of actions to be performed and the control circuit performing the set of actions: the natural language-based communication interface issuing to the operator a query for validating the rule.

7. The method of any preceding claim, further comprising: monitoring the ambient conditions within the system, and when a respective rule indicates that the control circuit should apply one or more actions based on the current ambient conditions, the control circuit then performing the corresponding one or more actions.

8. The method of any preceding claim, wherein the rule is used as training data for training a model that is then executed by the control circuit in order to automatically adapt the system based on the ambient conditions in order to reduce operator fatigue.

9. The method of any preceding claim, wherein the system is a collaborative human-robot system, wherein the control circuit is configured to control a robot that is performing one or more tasks in collaboration with a human operator, and wherein the one or more actions to be performed by the control circuit of the system to reduce operator fatigue include one or more of: (i) reducing a speed of the robot; (ii) controlling a heater to adjust the ambient temperature; or (iii) controlling a light source to adjust the ambient lighting conditions.

10. The method of any of claim 1 to 8, wherein the system is a semi-autonomous or intelligent vehicle system, wherein the control circuit is configured either to control the vehicle itself or to control one or more conditions within the vehicle, and wherein the one or more actions to be performed by the control circuit of the system to reduce operator fatigue include one or more of: (i) delegating control to an autonomous or advanced vehicle operator assistance module of the vehicle; (ii) controlling a heater to adjust the ambient temperature within the vehicle; or (iii) controlling a light source to adjust the ambient lighting conditions within the vehicle.

11. A non-transitory computer readable storage medium storing software code that when executing on a data processor performs a method of monitoring a fatigue level of an operator within a system according to any one or more of claims 1 to 10.

12. An apparatus for monitoring a fatigue level of an operator within a system, wherein the system is a collaborative system that is operated through a combination of the operator's actions and actions performed by a control circuit of the system, the apparatus comprising:
a natural language-based communication interface operable to obtain from an operator of the system an indication in natural language of the operator's current fatigue level;
a natural language processing (NLP) unit operable to process the natural language-based indications obtained via the natural language-based communication interface operable in order to determine a set of one or more data points indicative of the operator's current fatigue level;
a set of one or more environmental sensors operable to obtain data indicative of the current ambient conditions within the system; and
a control circuit for the system, wherein the control circuit is operable such that:
in response to the natural language-based communication interface obtaining an indication of the operator's current fatigue level and the NLP unit then processing the indication to determine a set of one or more data points indicative of the operator's current fatigue level:
the control circuit obtains from the set of one or more environmental sensors data indicative of the ambient conditions associated with the operator's current fatigue level;
the control circuit then determines, using the determined set of one or more data points indicative of the operator's current fatigue level and the associated ambient conditions, one or more actions to be performed by the control circuit of the system to reduce operator fatigue; and
the control circuit then generates a respective rule that can be automatically applied by the control circuit when similar ambient conditions are subsequently encountered within the system, the respective rule comprising an input set of ambient conditions and a corresponding one or more actions to be performed when the input set of ambient conditions is encountered.

13. The apparatus of claim 12, wherein the control circuit is further configured: once a respective one or more actions to be performed by the control circuit of the system to reduce operator fatigue have been determined, to validate the one or more actions by issuing via the natural language-based communication interface a query to the operator to obtain an indication of whether the one or more actions has had a positive effect on the operator's fatigue condition, and wherein when the operator's response indicates that the one or more actions has had a positive effect on the operator's fatigue condition, a corresponding rule is stored for subsequent use by the control circuit.

14. The apparatus of claim 12 or 13, wherein the respective rule, optionally after validation, is stored and used as training data for training a model that is then executed by the control circuit in order to automatically adapt the system based on the ambient conditions in order to reduce operator fatigue.

15. The apparatus of any of claims 12, 13 or 14, wherein the system comprises a collaborative human-robot system and/or wherein the system comprises a semi-autonomous or intelligent vehicle system.
